# EUROPÄISCHE PATENTSCHRIFT

(11) **EP 3 611 887 B1**
(45) Veröffentlichungstag und Bekanntmachung des Hinweises auf die Patenterteilung: **14.09.2022**
(21) Anmeldenummer: 19178323.2
(22) Anmeldetag: 05.06.2019
(51) Int. Cl.: H04L 45/00, H04L 45/28, H04L 47/625, H04L 47/62, H04L 47/50

(54) **ERSTE NETZWERKEINHEIT EINES KOMMUNIKATIONSNETZWERKS**
FIRST NETWORK UNIT OF A COMMUNICATION NETWORK
PREMIÈRE UNITÉ DE RÉSEAU D'UN RÉSEAU DE COMMUNICATION

(30) Priorität: 25.07.2018 DE 102018212360
(43) Veröffentlichungstag der Anmeldung: 19.02.2020
(73) Patentinhaber: Robert Bosch GmbH, 70442 Stuttgart (DE)
(72) Erfinder: Luebben, Ralf, 24106 Kiel (DE); Morgenroth, Johannes, 38100 Braunschweig (DE)

(56) Entgegenhaltungen:
- US-A1- 2006 203 719
- US-A1- 2015 043 330

## Beschreibung

### Stand der Technik

Die Erfindung betrifft eine erste Netzwerkeinheit eines Kommunikationsnetzwerks.

US 2015/043330 A1 offenbart Hitless-Protection in paketvermittelten Netzwerken.

US 2006/203719 A1 offenbart Protection Switching eines virtuellen privaten Netzwerks, wobei funktionierende VPN-Pfade und Schutz-VPN-Pfade definiert werden.

### Offenbarung der Erfindung

Die Probleme des Standes der Technik werden durch eine 1. Netzwerkeinheit eines Kommunikationsnetzwerks gemäß dem Anspruch 1 gelöst.

Gemäß einem Aspekt dieser Beschreibung wird erste Netzwerkeinheit eines Kommunikationsnetzwerks bereitgestellt, wobei die erste Netzwerkeinheit mindestens einen Prozessor, mindestens einen Speicher mit Computerprogrammcode und mindestens ein Kommunikationsmodul umfasst, wobei der Computerprogrammcode so konfiguriert ist, dass er mit dem mindestens einen Prozessor und dem mindestens einen Kommunikationsmodul bewirkt, dass die erste Netzwerkeinheit einen ersten und zweiten Datenstrom in Abhängigkeit von einem dritten Datenstrom ermittelt, erste Datenpakete des ersten Datenstroms in eine erste Queue einstellt, zweite Datenpakete des zweiten Datenstroms in eine zweite Queue einstellt, die ersten Datenpakete über einen ersten Kommunikationskanal in Richtung einer zweiten Netzwerkeinheit versendet, die zweiten Datenpakete über einen zweiten Kommunikationskanal in Richtung der zweiten Netzwerkeinheit versendet, wobei der erste und der zweite Kommunikationskanal zumindest abschnittsweise unterschiedliche Kommunikationspfade umfassen, einen Übergabebefehl zum Abzug der zweiten Datenpakete von der zweiten Queue ermittelt, wenigstens einen Teil der zweiten Datenpakete in Abhängigkeit von dem ermittelten Übergabebefehl von der zweiten Queue in die erste Queue verschiebt, und die ersten Datenpakete und die zweiten Datenpakete über den ersten Kommunikationskanal in Richtung der zweiten Netzwerkeinheit versendet.

Vorteilhaft werden durch das vorgeschlagene Verschieben der zweiten Daten in die Queue in Abhängigkeit von dem Übergabebefehl Daten nicht doppelt versendet. Die Brutto-Datenrate der in Richtung der zweiten Netzwerkeinheit versandten Daten ändert sich folglich nicht. Insbesondere wird einem Doppelversand von Daten vorgebeugt. Darüber hinausgehend wird einem Verlust von Datenpaketen vorgebeugt, da diese möglichst frühzeitig in die erste Queue eingestellt werden.

Insgesamt verbessert sich die Datenkommunikation insbesondere bei häufigen Änderungen der Übertragungsqualität und der Kommunikationspartner auf den unteren Netzwerkebenen. Dies ist beispielsweise bei einer Drahtlos-Kommunikation zwischen und mit sich bewegenden Kraftfahrzeugen der Fall.

Ein vorteilhaftes Beispiel zeichnet sich dadurch aus, dass die erste Netzwerkeinheit eine in der Zukunft liegende mögliche Verschlechterung des zweiten Kommunikationskanals ermittelt, und der Übergabebefehl in Abhängigkeit von der möglichen Verschlechterung ermittelt wird. Durch die Ermittlung der möglichen Verschlechterung und dem Übergabebefehl wird vorteilhaft potenziellen Verlusten von Datenpaketen vorgebeugt.

Ein vorteilhaftes Beispiel zeichnet sich dadurch aus, dass die erste Netzwerkeinheit nach der Ermittlung des Übergabebefehls eine Anzahl von positiven Empfangsbestätigungen von bereits aus der zweiten Queue stammenden und versandten zweiten Datenpaketen empfängt, und nach Empfang der Anzahl von positiven Empfangsbestätigungen mit dem zweiten Kommunikationskanal verknüpfte Verbindung schließt. Vorteilhaft ergeben sich durch das Abwarten des Empfangs der positiven Empfangsbestätigungen keine Paketverluste und keine Sendewiederholungen. Ein zugeordneter Congestion Control Mechanismus erkennt folglich auch keine Überlastung des dritten aufgeteilten Datenstroms.

Ein vorteilhaftes Beispiel zeichnet sich dadurch aus, dass die erste Netzwerkeinheit eine negative Empfangsbestätigung auf den Versand eines der zweiten Datenpakete über den zweiten Kommunikationskanal hin und nach der Ermittlung des Übergabebefehls empfängt. Oder eine Wartezeitdauer, welche mit dem Versand des einen der zweiten Datenpakete beginnt, läuft ohne einen Empfang einer mit dem einen der zweiten Datenpakete verknüpften positiven Empfangsbestätigung und nach der Ermittlung des Übergabebefehls ab. Das mit der negativen oder positiven Empfangsbestätigung verknüpfte zweite Datenpaket wird über den ersten Kommunikationskanal in Richtung der zweiten Netzwerkeinheit versendet. Vorteilhaft kann die Überleitung der zweiten Datenpakete auf den ersten Kommunikationskanal auch bei einem Auftreten einer negativen Empfangsbestätigung erfolgen.

Ein vorteilhaftes Beispiel zeichnet sich dadurch aus, dass die erste Netzwerkeinheit die ersten und zweiten Datenpakete in Abhängigkeit von dritten Datenpaketen in die Queues einstellt, wobei die dritten Datenpakete eine jeweilige Kennung aufweisen, welche die Reihenfolge der dritten Datenpakete untereinander definiert, und wenigstens einen Teil der zweiten Datenpakete in Abhängigkeit von dem ermittelten möglichen Ausfallereignis und in Abhängigkeit von den Kennungen der ersten und zweiten Datenpakete von der zweiten Queue in die erste Queue einsortiert. Vorteilhaft kann die Reihenfolge der Datenpakete auch beim Versand über den ersten Kommunikationskanal aufrechterhalten werden, und zwar unabhängig von dem zuvor erfolgten Einsortierschema in die beiden Queues.

Ein vorteilhaftes Beispiel zeichnet sich dadurch aus, dass die erste Netzwerkeinheit eine Messgröße in Abhängigkeit von über den zweiten Kommunikationskanal versendeten und oder empfangenen Datenpaketen ermittelt, welche den Zustand des zweiten Kommunikationskanals charakterisiert, und die Übergabe in Abhängigkeit von der ermittelten Messgröße ermittelt. Vorteilhaft kann durch die Beobachtung des zweiten Kommunikationskanal mittels der Messgröße ohne unnötig hohen Kommunikationsaufwand auf die mögliche Verschlechterung des zweiten Kommunikationskanals geschlossen werden.

Ein vorteilhaftes Beispiel zeichnet sich dadurch aus, dass die erste Netzwerkeinheit eine Nachricht empfängt, welche eine Nicht-Benutzung des zweiten Kommunikationskanals indiziert, und den Übergabebefehl in Abhängigkeit von der empfangenen Nachricht ermittelt. Vorteilhaft können externe Quellen zur Beurteilung des Zustandes des zweiten Kommunikationskanals herangezogen werden.

Ein vorteilhaftes Beispiel zeichnet sich dadurch aus, dass die erste Netzwerkeinheit eine fahrzeugseitige Netzwerkeinheit eines Funkkommunikationsnetzwerks ist.

Gemäß einem weiteren Aspekt wird ein Kraftfahrzeug umfassend die erste Netzwerkeinheit nach einem der vorstehenden Beispiele bereitgestellt.

Ein weiterer Aspekt dieser Beschreibung betrifft ein Verfahren zum Betreiben einer ersten Netzwerkeinheit, wobei das Verfahren umfasst: Ermitteln eines ersten und zweiten Datenstroms in Abhängigkeit von einem dritten Datenstrom, Einstellen erster Datenpakete des ersten Datenstroms in eine erste Queue, Einstellen zweiter Datenpakete des zweiten Datenstroms in eine zweite Queue, Versenden der ersten Datenpakete über einen ersten Kommunikationskanal in Richtung einer zweiten Netzwerkeinheit, Versenden der zweiten Datenpakete über einen zweiten Kommunikationskanal in Richtung der zweiten Netzwerkeinheit, wobei der erste und der zweite Kommunikationskanal zumindest abschnittsweise unterschiedliche Kommunikationspfade umfassen, Ermitteln eines Übergabebefehls zum Abzug der zweiten Datenpakete von der zweiten Queue, Verschieben wenigstens eines Teils der zweiten Datenpakete in Abhängigkeit von dem ermittelten Übergabebefehl von der zweiten Queue in die erste Queue, und Versenden der ersten Datenpakete und die zweiten Datenpakete über den ersten Kommunikationskanal in Richtung der zweiten Netzwerkeinheit.

Weitere Merkmale und Vorteile ergeben sich aus der nachfolgenden Beschreibung von Ausführungsbeispielen. In der Zeichnung zeigen:
Figur 1 ein schematisches Ablaufdiagramm;
Figur 2 ein schematisches Blockdiagramm eines Kommunikationsnetzwerks; und
Figur 3 ein schematisches Blockdiagramm mit einer ersten und einer zweiten Netzwerkeinheit.

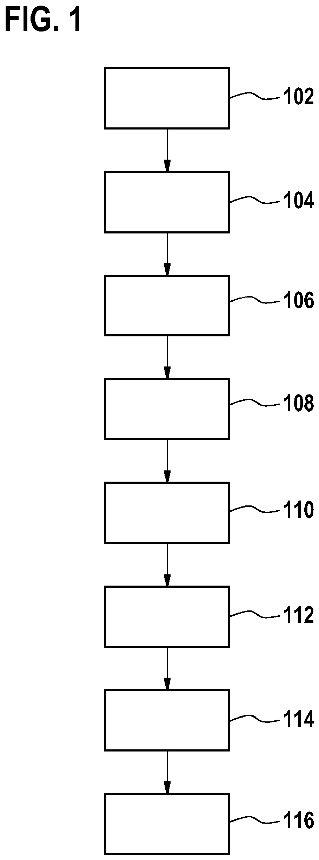

Figur 1 zeigt ein schematisches Ablaufdiagramm zum Betreiben einer ersten Netzwerkeinheit eines Kommunikationsnetzwerks. Die erste Netzwerkeinheit ermittelt in einem Schritt 102 einen ersten und einen zweiten Datenstrom in Abhängigkeit von einem dritten Datenstrom. In einem Schritt 104 stellt die erste Netzwerkeinheit erste Datenpakete des ersten Datenstroms in eine erste Queue ein. In einem Schritt 106 stellt die erste Netzwerkeinheit zweite Datenpakete des zweiten Datenstroms in eine zweite Queue ein. In einem Schritt 108 versendet die erste Netzwerkeinheit die ersten Datenpakete über einen ersten Kommunikationskanal in Richtung einer zweiten Netzwerkeinheit. In einem Schritt 110 versendet die erste Netzwerkeinheit die zweiten Datenpakete über einen zweiten Kommunikationskanal in Richtung der zweiten Netzwerkeinheit, wobei der erste und der zweite Kommunikationskanal zumindest abschnittsweise unterschiedliche Kommunikationspfade umfassen. In einem Schritt 112 ermittelt die erste Netzwerkeinheit einen Übergabebefehl zum Abzug der zweiten Datenpakete von der zweiten Queue. In einem Schritt 114 verschiebt die erste Netzwerkeinheit wenigstens einen Teil der zweiten Datenpakete in Abhängigkeit von dem ermittelten Übergabebefehl von der zweiten Queue in die erste Queue. Sollten beispielsweise weitere, über die beiden vorgenannten Queues hinausgehende Queues vorhanden sein, so wird ein weiterer Teil der zweiten Datenpakete im Schritt 114 in diese anderen Queues eingestellt. Im Falle von lediglich zwei vorhandener Queues werden beispielsweise alle in der zweiten Queue vorhandenen Datenpakete in die erste Queue eingestellt. Ziel ist es also, die zweite Queue zu leeren und dort noch vorhandenen Datenpakete auf die Queues zu verteilen, welche einem funktionierenden Kommunikationskanal zugeordnet sind. Einem Schritt 116 versendet die erste Netzwerkeinheit die ersten Datenpakete und die zweiten Datenpakete über den ersten Kommunikationskanal in Richtung einer zweiten Netzwerkeinheit.

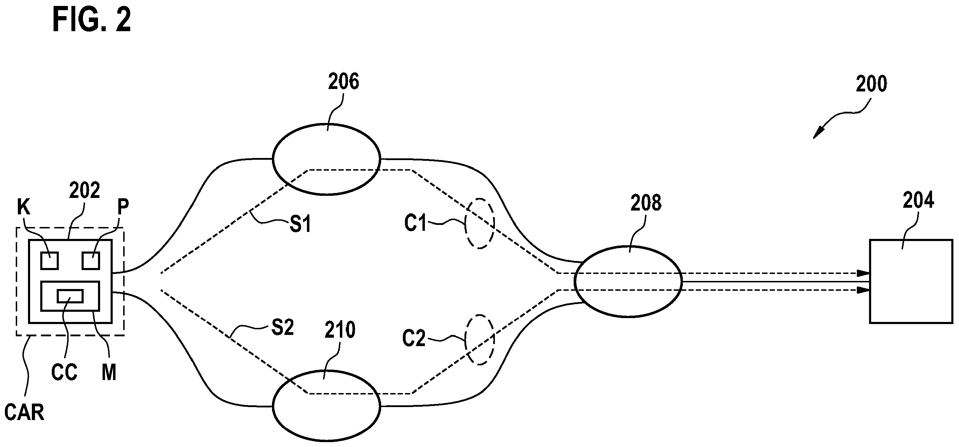

Figur 2 zeigt ein schematisch dargestelltes Kommunikationsnetzwerk 200. Die erste Netzwerkeinheit 202 ist beispielsweise in einem Kraftfahrzeug CAR angeordnet und umfasst wenigstens einen Prozessor P, wenigstens ein Kommunikationsmodul K und wenigstens einen Speicher M, auf dem Computerprogrammcode CC abgespeichert ist. Der Computerprogrammcode CC ist so konfiguriert, dass er mit dem mindestens einen Prozessor P und dem mindestens einen Kommunikationsmodul K bewirkt, dass die erste Netzwerkeinheit 202 wenigstens eines der in dieser Beschreibung dargestellten Verfahren ausführt.

In einem Beispiel ist die erste Netzwerkeinheit 202 eine fahrzeugseitige Netzwerkeinheit und zur Anordnung in einem Kraftfahrzeug vorgesehen. Das Kommunikationsnetzwerk 200 ist entsprechend zumindest abschnittsweise ein Funkkommunikationsnetzwerk. Entsprechend umfasst die erste Netzwerkeinheit 202 eine nicht dargestellte Antenne.

Die erste Netzwerkeinheit 202 teilt den dritten Datenstrom in den ersten und zweiten Datenstrom S1 und S2 auf. Der erste und zweite Datenstrom S1, S2 werden über den jeweiligen ersten und zweiten Kommunikationskanal C1, C2 in Richtung der zweiten Netzwerkeinheit 204 versendet. Der erste Datenstrom S1 wird über einen ersten Netzwerkabschnitt 206 und einen zweiten Netzwerkabschnitt 208 an die zweite Netzwerkeinheit 204 übermittelt. Der zweite Datenstrom S2 wird über einen dritten Netzwerkabschnitt 210 und den zweiten Netzwerkabschnitt 208 an die zweite Netzwerkeinheit 204 übermittelt. Die Netzwerkabschnitte 206, 208 und 210 umfassen wenigstens eine weitere Netzwerkeinheit, welche die Datenströme S1, S2 weiterleitet. Wie aus Figur 2 ersichtlich, fallen die Netzwerkabschnitte 206 und 210 derart auseinander, dass der erste und der zweite Kommunikationskanal C1, C2 zumindest abschnittsweise unterschiedliche Kommunikationspfade umfassen, wobei ein Kommunikationspfad beispielsweise zwischen der Netzwerkeinheit 202 und dem Netzwerkabschnitt 206 bzw. zwischen unterschiedlichen Netzwerkabschnitten 206, 208 angeordnet ist. Die Darstellung der des ersten und des zweiten Datenstroms S1, S2 ist in Figur 2 nur beispielhaft und repräsentiert einen fehlerfreien Fall der Aufteilung der Datenströme S1, S2 auf die Kommunikationskanäle C1, C2. Selbstverständlich können auch mehr als zwei Kommunikationskanäle C1, C2 vorhanden sein, über die weitere mit den Datenströmen S1, S2 verknüpfte Datenströme versendet werden.

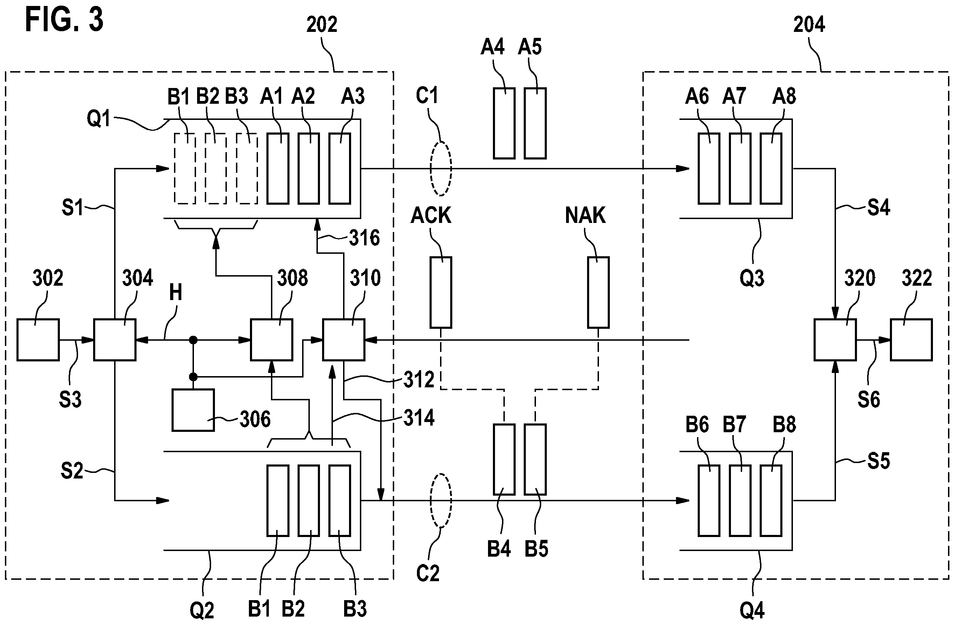

Figur 3 zeigt ein schematisches Blockdiagramm mit der ersten und der zweiten Netzwerkeinheit 202, 204. Ein Block 302 ermittelt den dritten Datenstrom S3 umfassend dritte Datenpakete. Der Block 302 repräsentiert beispielsweise eine Applikation, welche auf der ersten Netzwerkeinheit 202 ausgeführt wird und die dritten Datenpakete in Richtung der zweiten Netzwerkeinheit 204 versenden möchte.

Ein Block 304 teilt den dritten Datenstrom S3 beispielsweise in den ersten und den zweiten Datenstrom S1, S2 derart auf, dass keines der im dritten Datenstrom enthaltenen dritten Datenpakete in einem der Datenströme S1, S2 zweimal oder häufiger enthalten ist. Alternativ können die Datenströme S1, S2 die dritten Datenpakete in redundanter Form enthalten. Beispielsweise kann eine alternierende Aufteilung erfolgen, d.h. den Datenströme S1, S2 werden abwechselnd dritte Datenpakete des dritten Datenstroms S3 zugewiesen.

In einem weiteren Beispiel stellt der Block 304 nach Erhalt des Übergabebefehls H die Datenpakete des dritten Datenstrom S3 in redundanter Form in die erste und zweite Queue Q1, Q2 ein, um die Ausfallsicherheit zu erhöhen. Ist die Übergabe der zum Zeitpunkt der Ermittlung des Übergabebefehls H in der Queue Q2 befindlichen zweiten Datenpakete an die erste Queue Q1 abgeschlossen, so beendet der Block 304 das Einstellen der dritten Datenpakete in die zweite Queue Q2.

Die ersten Datenpakete A1, A2 und A3 des ersten Datenstroms S1 werden von dem Block 304 in eine erste Queue Q1 eingestellt. Die zweiten Datenpakete B1, B2, B3 des zweiten Datenstroms S2 werden von dem Block 304 in eine zweite Queue Q2 eingestellt. Die so eingestellten ersten und zweiten Datenpakete A, B werden zum Versand aus der jeweiligen Queue Q1, Q2 entnommen und wie beispielhaft anhand der Datenpakete A4, A5, B4, B5 gezeigt, über den jeweiligen Kommunikationskanal C1, C2 versendet.

Ein Block 306 ermittelt einen Übergabebefehl H zur Durchführung eines Handover, sodass noch in der zweiten Queue Q2 vorhandene zweite Datenpakete nicht über den zweiten Kommunikationskanal C2 versendet werden sondern wenigstens über den ersten Kommunikationskanal C1. Selbstverständlich können weitere Queues vorhanden sein, in welche die in der zweiten Queue Q2 vorhandene Datenpakete wenigstens teilweise eingestellt werden, um über einen weiteren Kommunikationskanal in Richtung der zweiten Netzwerkeinheit versendet zu werden. Auf Empfang des Übergabebefehls H hin stellt der Block 304 die Übergabe von zweiten Datenpaketen des zweiten Datenstroms S2 an die zweite Queue Q2 ein. Ein Block 308 entnimmt die zweiten Daten B1, B2, B3, welche sich noch in der zweiten Queue Q2 befinden und stellt die zweiten Datenpakete B1 bis B3 in die erste Queue Q1 ein. Beispielsweise umfassen die ersten Datenpakete A1 bis A3 und die zweiten Datenpakete B1 bis B3 eine jeweilige Kennung auf, welche die Reihenfolge innerhalb des dritten Datenstroms S3 repräsentiert. Der Block 308 vergleicht die Kennungen der ersten und zweiten Datenpakete A1 bis A3, B1 bis B3 und sortiert diese entsprechend in die Queue Q1 ein, um eine Reihenfolge beim Versand sicherzustellen.

Der Übergabebefehl H wird von dem Block 306 beispielsweise in Abhängigkeit von einer Beobachtung des zweiten Kommunikationskanals C2 ermittelt. So indiziert beispielsweise eine Anzahl von positiven bzw. negativen Empfangsbestätigungen ausgehend von der zweiten Netzwerkeinheit 204, dass sich eine Verschlechterung des zweiten Kommunikationskanals C2 abzeichnet. Folglich ermittelt der Block 306 eine in der Zukunft liegende mögliche Verschlechterung des zweiten Kommunikationskanals und ermittelt den Übergabebefehl H in Abhängigkeit von dieser möglichen Verschlechterung. Selbstverständlich können auch andere Messgrößen, welche auf eine mögliche Verschlechterung des zweiten Kommunikationskanals C2 hindeuten, zur Ermittlung des Übergabebefehls H führen. Alternativ oder zusätzlich wird der Übergabebefehl H von der zweiten Netzwerkeinheit 202 empfangen. Alternativ oder zusätzlich wird eine Nachricht empfangen, welche Nichtbenutzung des 2. Kommunikationskanals C2 indiziert, und in Abhängigkeit von der empfangenen Nachricht wird der Übergabebefehl H ermittelt.

Ein Block 310 überwacht nach der Ermittlung des Übergabebefehls H den Empfang von positiven Empfangsbestätigungen von bereits aus der zweiten Queue Q2 stammenden und versandten zweiten Datenpaketen wie beispielsweise dem Datenpaket B4. Die dem zweiten Datenpaket B4 zugeordnete positive Empfangsbestätigung ACK wird von dem Block 310 empfangen. Nach Empfang einer Anzahl von positiven Empfangsbestätigungen, vorliegend der positiven Empfangsbestätigung ACK, schließt der Block 310 in einem Schritt 312 eine mit dem zweiten Kongregationskanal C2 verknüpfte Verbindung bzw. deaktiviert das entsprechende Hardware- und/oder Softwareinterface.

Der Block 310 überwacht ebenso die Anzahl von negativen Empfangsbestätigungen von bereits aus der zweiten Queue Q2 stammenden und versandten zweiten Datenpaketen. Wird also nach der Ermittlung des Übergabebefehls H eine negative Empfangsbestätigung NAK von den Block 310 empfangen, welche einem zweiten Datenpakete B5 zugeordnet ist, so entnimmt der Block 310 in einem Schritt 314 das zweite Datenpaket B5 aus der zweiten Queue Q2 und stellt dieses im Schritt 316 in die erste Queue Q1 ein, wobei selbstverständlich eine Einsortierung des zweiten Datenpaket B5 entsprechend der jeweiligen Kennung in die erste Queue Q1 erfolgt. Damit wird ein nicht empfangenes zweites Datenpaket B5 nicht nochmals über den zweiten Kommunikationskanal C2 versendet, sondern über den ersten Kommunikationskanal C1.

Die zweite Netzwerkeinheit 204 umfasst eine dritte Queue Q3 und eine vierte Queue Q4, wobei die empfangenen ersten Datenpakete A6 bis A8 in die dritte Queue Q3 eingestellt werden und die zweiten Datenpakete B6-B8 in die vierte Queue Q4 eingestellt werden. Ein Block 320 entnimmt die ersten und zweiten Datenpakete A, B entsprechend einem jeweiligen vierten und fünfsten Datenstrom S4, S5 und setzt diese Datenpakete A, B zu einem Datenstrom S6 zusammen, welcher dem Datenstrom S3 ausgehend von dem Block 302 entspricht. Ein Block 322, welcher beispielsweise eine Applikation auf dem zweiten Endgerät 204 ausführt, empfängt den zusammengesetzten Datenstrom S6.

## Patentansprüche

1. Eine erste Netzwerkeinheit (202) eines Kommunikationsnetzwerks, wobei
die erste Netzwerkeinheit (202) mindestens einen Prozessor, mindestens einen Speicher mit Computerprogrammcode und mindestens ein Kommunikationsmodul umfasst, wobei der Computerprogrammcode so konfiguriert ist, dass er mit dem mindestens einen Prozessor und dem mindestens einen Kommunikationsmodul bewirkt, dass die erste Netzwerkeinheit (202)
einen ersten und zweiten Datenstrom in Abhängigkeit von einem dritten Datenstrom ermittelt,
erste Datenpakete des ersten Datenstroms in eine erste Queue einstellt, zweite Datenpakete des zweiten Datenstroms in eine zweite Queue einstellt, die ersten Datenpakete über einen ersten Kommunikationskanal in Richtung einer zweiten Netzwerkeinheit (204) versendet,
die zweiten Datenpakete über einen zweiten Kommunikationskanal in Richtung der zweiten Netzwerkeinheit (204) versendet, wobei der erste und der zweite Kommunikationskanal zumindest abschnittsweise unterschiedliche Kommunikationspfade umfassen, **dadurch gekennzeichnet, dass** einen Übergabebefehl zum Abzug der zweiten Datenpakete von der zweiten Queue ermittelt wird, wenigstens einen Teil der zweiten Datenpakete in Abhängigkeit von dem ermittelten Übergabebefehl von der zweiten Queue in die erste Queue verschoben wird, und
die ersten Datenpakete und die zweiten Datenpakete über den ersten Kommunikationskanal in Richtung der zweiten Netzwerkeinheit (204) versendet werden.

2. Die erste Netzwerkeinheit (202) nach dem Anspruch 1, wobei die erste Netzwerkeinheit (202)
eine in der Zukunft liegende mögliche Verschlechterung des zweiten Kommunikationskanals ermittelt, und
der Übergabebefehl in Abhängigkeit von der möglichen Verschlechterung ermittelt wird.

3. Die erste Netzwerkeinheit (202) nach dem Anspruch 1 oder 2, wobei die erste Netzwerkeinheit (202)
nach der Ermittlung des Übergabebefehls eine Anzahl von positiven Empfangsbestätigungen von bereits aus der zweiten Queue stammenden und versandten zweiten Datenpaketen empfängt, und
nach Empfang der Anzahl von positiven Empfangsbestätigungen mit dem zweiten Kommunikationskanal verknüpfte Verbindung schließt.

4. Die erste Netzwerkeinheit (202) nach einem der vorstehenden Ansprüche, wobei die erste Netzwerkeinheit (202)
eine negative Empfangsbestätigung auf den Versand eines der zweiten Datenpakete über den zweiten Kommunikationskanal hin und nach der Ermittlung des Übergabebefehls empfängt oder eine Wartezeitdauer, welche mit dem Versand des einen der zweiten Datenpakete beginnt, ohne einen Empfang einer mit dem einen der zweiten Datenpakete verknüpften positiven Empfangsbestätigung und nach der Ermittlung des Übergabebefehls abläuft, und
das mit der negativen Empfangsbestätigung oder der positiven Empfangsbestätigung verknüpfte zweite Datenpaket über den ersten Kommunikationskanal in Richtung der zweiten Netzwerkeinheit (204) versendet.

5. Die erste Netzwerkeinheit (202) nach einem der vorstehenden Ansprüche, wobei die erste Netzwerkeinheit (202)
die ersten und zweiten Datenpakete in Abhängigkeit von dritten Datenpaketen in die Queues einstellt, wobei die dritten Datenpakete eine jeweilige Kennung aufweisen, welche die Reihenfolge der dritten Datenpakete untereinander definiert, und
wenigstens einen Teil der zweiten Datenpakete in Abhängigkeit von dem ermittelten möglichen Ausfallereignis und in Abhängigkeit von den Kennungen der ersten und zweiten Datenpakete von der zweiten Queue in die erste Queue einsortiert.

6. Die erste Netzwerkeinheit (202) nach einem der vorstehenden Ansprüche, wobei die erste Netzwerkeinheit (202)
eine Messgröße in Abhängigkeit von über den zweiten Kommunikationskanal versendeten und oder empfangenen Datenpaketen ermittelt, welche den Zustand des zweiten Kommunikationskanals charakterisiert, und
die Übergabe in Abhängigkeit von der ermittelten Messgröße ermittelt.

7. Die erste Netzwerkeinheit (202) nach einem der vorstehenden Ansprüche, wobei die erste Netzwerkeinheit (202)
eine Nachricht empfängt, welche eine Nicht-Benutzung des zweiten Kommunikationskanals indiziert, und
den Übergabebefehl in Abhängigkeit von der empfangenen Nachricht ermittelt.

8. Die erste Netzwerkeinheit (202) nach einem der vorstehenden Ansprüche, wobei die erste Netzwerkeinheit (202) eine fahrzeugseitige Netzwerkeinheit eines Funkkommunikationsnetzwerks ist.

9. Ein Kraftfahrzeug umfassend die erste Netzwerkeinheit (202) nach einem der vorstehenden Ansprüche.

10. Ein Verfahren zum Betreiben einer ersten Netzwerkeinheit (202), wobei das Verfahren umfasst:
Ermitteln eines ersten und zweiten Datenstroms in Abhängigkeit von einem dritten Datenstrom,
Einstellen erster Datenpakete des ersten Datenstroms in eine erste Queue, Einstellen zweiter Datenpakete des zweiten Datenstroms in eine zweite Queue,
Versenden der ersten Datenpakete über einen ersten Kommunikationskanal in Richtung einer zweiten Netzwerkeinheit (204),
Versenden der zweiten Datenpakete über einen zweiten Kommunikationskanal in Richtung der zweiten Netzwerkeinheit (204), wobei der erste und der zweite Kommunikationskanal zumindest abschnittsweise unterschiedliche Kommunikationspfade umfassen, **gekennzeichnet durch** das Ermitteln eines Übergabebefehls zum Abzug der zweiten Datenpakete von der zweiten Queue,
Verschieben wenigstens eines Teils der zweiten Datenpakete in Abhängigkeit von dem ermittelten Übergabebefehl von der zweiten Queue in die erste Queue, und
Versenden der ersten Datenpakete und der zweiten Datenpakete über den ersten Kommunikationskanal in Richtung der zweiten Netzwerkeinheit (204).

## Claims

1. First network unit (202) of a communication network, wherein the first network unit (202) comprises at least one processor, at least one memory with computer program code and at least one communication module, wherein the computer program code is configured such that, with the at least one processor and the at least one communication module, it causes the first network unit (202) to determine a first data stream and a second data stream on the basis of a third data stream,
to place first data packets of the first data stream into a first queue,
to place second data packets of the second data stream into a second queue,
to transmit the first data packets in the direction of a second network unit (204) via a first communication channel,
to transmit the second data packets in the direction of the second network unit (204) via a second communication channel, wherein the first and second communication channels comprise different communication paths at least in sections, **characterized in that**
a handover command for removing the second data packets from the second queue is determined,
at least some of the second data packets are moved from the second queue into the first queue on the basis of the determined handover command, and
the first data packets and the second data packets are transmitted in the direction of the second network unit (204) via the first communication channel.

2. First network unit (202) according to Claim 1, wherein the first network unit (202)
determines a possible future deterioration in the second communication channel, and
the handover command is determined on the basis of the possible deterioration.

3. First network unit (202) according to Claim 1 or 2, wherein the first network unit (202),
after determining the handover command, receives a number of positive receipt confirmations for second data packets which already originate from the second queue and have been transmitted, and
after receiving the number of positive receipt confirmations, closes a connection linked to the second communication channel.

4. First network unit (202) according to one of the preceding claims, wherein the first network unit (202)
receives a negative receipt confirmation in response to the transmission of one of the second data packets via the second communication channel and after determining the handover command, or a waiting period, which starts with the transmission of the one of the second data packets, elapses without receiving a positive receipt confirmation linked to the one of the second data packets and after determining the handover command, and
transmits the second data packet linked to the negative receipt confirmation or the positive receipt confirmation in the direction of the second network unit (204) via the first communication channel.

5. First network unit (202) according to one of the preceding claims, wherein the first network unit (202)
places the first and second data packets in the queues on the basis of third data packets, wherein the third data packets have a respective identifier which defines the order of the third data packets among one another, and
sorts at least some of the second data packets from the second queue into the first queue on the basis of the determined possible failure event and on the basis of the identifiers of the first and second data packets.

6. First network unit (202) according to one of the preceding claims, wherein the first network unit (202)
determines a measurement variable on the basis of data packets transmitted and/or received via the second communication channel, which measurement variable characterizes the state of the second communication channel, and
determines the handover on the basis of the determined measurement variable.

7. First network unit (202) according to one of the preceding claims, wherein the first network unit (202)
receives a message indicating non-use of the second communication channel, and
determines the handover command on the basis of the received message.

8. First network unit (202) according to one of the preceding claims, wherein the first network unit (202) is a vehicle network unit of a radio communication network.

9. Motor vehicle comprising the first network unit (202) according to one of the preceding claims.

10. Method for operating a first network unit (202), wherein the method comprises:
determining a first data stream and a second data stream on the basis of a third data stream,
placing first data packets of the first data stream into a first queue,
placing second data packets of the second data stream into a second queue,
transmitting the first data packets in the direction of a second network unit (204) via a first communication channel,
transmitting the second data packets in the direction of the second network unit (204) via a second communication channel, wherein the first and second communication channels comprise different communication paths at least in sections,
**characterized by**
transmitting a handover command for removing the second data packets from the second queue,
moving at least some of the second data packets from the second queue into the first queue on the basis of the determined handover command, and
transmitting the first data packets and the second data packets in the direction of the second network unit (204) via the first communication channel.

## Revendications

1. Première unité de réseau (202) d'un réseau de communication, dans laquelle
la première unité de réseau (202) comprend au moins un processeur, au moins une mémoire avec du code programme informatique et au moins un module de communication, le code programme informatique étant configuré de telle sorte qu'avec ledit au moins un processeur et ledit au moins un module de communication il amène la première unité de réseau (202) à
déterminer un premier et un deuxième flux de données en fonction d'un troisième flux de données,
placer des premiers paquets de données du premier flux de données dans une première file d'attente,
placer des deuxièmes paquets de données du deuxième flux de données dans une deuxième file d'attente,
envoyer les premiers paquets de données par un premier canal de communication en direction d'une deuxième unité de réseau (204),
envoyer les deuxièmes paquets de données par un deuxième canal de communication en direction de la deuxième unité de réseau (204), le premier et le deuxième canal de communication comprenant au moins par endroits différents chemins de communication,
**caractérisée en ce qu'**une commande de transfert pour le retrait des deuxièmes paquets de données de la deuxième file d'attente est déterminée,
au moins une partie des deuxièmes paquets de données est déplacée de la deuxième file d'attente à la première file d'attente en fonction de la commande de transfert déterminée, et
les premiers paquets de données et les deuxièmes paquets de données sont envoyés par le premier canal de communication en direction de la deuxième unité de réseau (204).

2. Première unité de réseau (202) selon la revendication 1, dans laquelle la première unité de réseau (202)
détermine une dégradation éventuelle dans le futur du deuxième canal de communication, et
la commande de transfert est déterminée en fonction de la dégradation éventuelle.

3. Première unité de réseau (202) selon la revendication 1 ou 2, dans laquelle la première unité de réseau (202)
reçoit après détermination de la commande de transfert un nombre d'accusés de réception positifs de deuxièmes paquets de données provenant déjà de la deuxième file d'attente et envoyées, et
ferme après réception du nombre d'accusés de réception positifs la liaison associée au deuxième canal de communication.

4. Première unité de réseau (202) selon l'une quelconque des revendications précédentes, dans laquelle la première unité de réseau (202)
reçoit un accusé de réception négatif suite à l'envoi d'un des deuxièmes paquets de données par le deuxième canal de communication et après détermination de la commande de transfert, ou une durée de temps d'attente, qui commence par l'envoi dudit un des deuxièmes paquets de données, expire sans la réception d'un accusé de réception positif associé audit un des deuxièmes paquets de données et après détermination de la commande de transfert, et
envoie le deuxième paquet de données associé à l'accusé de réception négatif ou à l'accusé de réception positif par le premier canal de communication en direction de la deuxième unité de réseau (204).

5. Première unité de réseau (202) selon l'une quelconque des revendications précédentes, dans laquelle la première unité de réseau (202)
place les premiers et les deuxièmes paquets de données en fonction de troisièmes paquets de données dans la file d'attente, les troisièmes paquets de données présentant un identifiant respectif qui définit l'ordre des troisièmes paquets de données entre eux, et
fait passer au moins une partie des deuxièmes paquets de données de la deuxième file d'attente à la première file d'attente, en fonction de l'événement de défaillance éventuel déterminé et en fonction des identifiants des premiers et des deuxièmes paquets de données.

6. Première unité de réseau (202) selon l'une quelconque des revendications précédentes, dans laquelle la première unité de réseau (202)
détermine une grandeur de mesure en fonction de paquets de données envoyés et/ou reçus par le deuxième canal de communication, qui caractérise l'état du deuxième canal de communication, et
détermine le transfert en fonction de la grandeur de mesure déterminée.

7. Première unité de réseau (202) selon l'une quelconque des revendications précédentes, dans laquelle la première unité de réseau (202)
reçoit un message qui indexe une non-utilisation du deuxième canal de communication, et
détermine la commande de transfert en fonction du message reçu.

8. Première unité de réseau (202) selon l'une quelconque des revendications précédentes, dans laquelle la première unité de réseau (202) est une unité de réseau, côté véhicule, d'un réseau de communication radio.

9. Véhicule automobile comprenant la première unité de réseau (202) selon l'une quelconque des revendications précédentes.

10. Procédé d'exploitation d'une première unité de réseau (202), le procédé comprenant les étapes consistant à :
déterminer un premier et un deuxième flux de données en fonction d'un troisième flux de données,
placer des premiers paquets de données du premier flux de données dans une première file d'attente,
placer des deuxièmes paquets de données du deuxième flux de données dans une deuxième file d'attente,
envoyer les premiers paquets de données par un premier canal de communication en direction d'une deuxième unité de réseau (204),
envoyer les deuxièmes paquets de données par un deuxième canal de communication en direction de la deuxième unité de réseau (204), le premier et le deuxième canal de communication comprenant au moins par endroits différents chemins de communication,
**caractérisé par**
la détermination d'une commande de transfert pour le retrait des deuxièmes paquets de données de la deuxième file d'attente,
le déplacement d'au moins une partie des deuxièmes paquets de données de la deuxième file d'attente à la première file d'attente en fonction de la commande de transfert déterminée, et
l'envoi des premiers paquets de données et des deuxièmes paquets de données par le premier canal de communication en direction de la deuxième unité de réseau (204).
